# EUROPEAN PATENT SPECIFICATION

(11) **EP 4 512 635 B1**
(45) Date of publication and mention of the grant of the patent: **18.02.2026**
(21) Application number: 24187272.0
(22) Date of filing: 09.07.2024
(51) Int. Cl.: B60C 9/20, B60C 9/22

(54) **HEAVY DUTY PNEUMATIC TIRE**
SCHWERLASTLUFTREIFEN
PNEUMATIQUE POUR POIDS LOURDS

(30) Priority: 25.08.2023 JP 2023137186
(43) Date of publication of application: 26.02.2025
(73) Proprietor: Sumitomo Rubber Industries, Ltd., Kobe-shi, Hyogo 651-0072 (JP)
(72) Inventor: HISAJIMA, HANA, Kobe-shi, 651-0072 (JP)
(74) Representative: Manitz Finsterwald Patent- und Rechtsanwaltspartnerschaft mbB

(56) References cited:
- EP-A1- 4 116 112
- EP-A1- 4 180 243
- JP-A- 2007 326 518
- US-A1- 2017 355 230

## Description

### BACKGROUND OF THE INVENTION

### Field of the Invention

The present invention relates to a heavy duty pneumatic tire.

### Background Art

From the viewpoint of drainage performance, at least two circumferential grooves are formed on the tread of a heavy duty pneumatic tire (hereinafter referred to as tire). Among the circumferential grooves formed on the tread, the circumferential groove located on the outer side in the axial direction is a shoulder circumferential groove.

In the tire, a dimensional change at a shoulder portion of the tread including the shoulder circumferential groove during running is large. In particular, in the case of a low-flatness tire having an aspect ratio of not greater than 65%, a dimensional change is likely to occur at a shoulder portion during running.

A tire that is likely to cause a dimensional change at a shoulder portion of a tread thereof is likely to cause uneven wear.

Japanese Laid-Open Patent Publication No. 2022-47999 discloses a tire that includes, as a reinforcing layer, a belt including a large number of belt cords aligned with each other and a band including a helically wound band cord and in which the band further includes a full band and edge bands.

It is considered that a tire including a reinforcing layer having such a configuration can suppress a dimensional change of a shoulder portion during running.

JP 2007 326518 A discloses a tire according to the preamble of claim 1.

Other prior art is known from US 2017/355230 A1, EP 4 180 243 A1 and EP 4 116 112 A1.

In recent years, the demand for low-rolling resistance (LRR) tires has been increasing, and there have been increasing cases where a pattern with increased stiffness, especially a pattern with increased stiffness of a center portion of a tread is required as a tire tread pattern.

Meanwhile, if a pattern with increased stiffness of a center portion of a tread is adopted for the tire of Japanese Laid-Open Patent Publication No. 2022-47999 in which a shape change around each shoulder circumferential groove is suppressed, the degree of dimensional change (outer diameter change) can be reduced, but a dimensional change of the center portion of the tread is excessively suppressed. In this case as well, each shoulder portion of the tread is in a state where a dimensional change is likely to occur as compared to the center portion of the tread. Therefore, the tire of Japanese Laid-Open Patent Publication No. 2022-47999 for which the pattern with increased stiffness of the center portion of the tread is further adopted may have poor uniformity in the ground-contact pressure of a tread surface, and therefore poor uneven wear resistance.

The present invention has been made in view of the above circumstances, and an object of the present invention is to provide a heavy duty pneumatic tire having a low degree of dimensional change of a tread and having a small difference between the dimensional change of a center portion of the tread and the dimensional change of each shoulder portion of the tread.

### SUMMARY OF THE INVENTION

(1) A heavy duty pneumatic tire according to one aspect of the present invention has a nominal aspect ratio of not greater than 65%, and includes:
   a tread configured to come into contact with a road surface; and
   a reinforcing layer located inward of the tread in a radial direction, wherein
   at least two circumferential grooves are formed on the tread to form at least three land portions aligned in an axial direction,
   of the at least two circumferential grooves, the circumferential groove located on each outer side in the axial direction is a shoulder circumferential groove,
   the land portion located outward of the shoulder circumferential groove in the axial direction is a shoulder land portion,
   one of the at least three land portions is a land portion including an equator of the tire,
   the reinforcing layer includes a belt including a large number of belt cords aligned with each other, and a band including a helically wound band cord,
   the belt includes a plurality of belt plies aligned in the radial direction,
   the band includes a full band having ends opposed to each other across an equator plane, and a pair of edge bands located outward of the ends of the full band in the radial direction,
   the full band includes two end regions each located on the outer side in the axial direction, and a central region interposed between the two end regions,
   a density of the band cord in the central region is lower than a density of the band cord in each of the end regions,
   each end of the full band is located outward of the shoulder circumferential groove in the axial direction, and
   an inner end of each of the edge bands is located outward of the shoulder circumferential groove in the axial direction.

This tire is a low-flatness tire and is a heavy duty pneumatic tire having high stiffness of a center portion of a tread.

Since this tire includes a reinforcing layer and this reinforcing layer includes a full band having ends opposed to each other across the equator plane and a pair of edge bands located outward of the ends of the full band in the radial direction, a dimensional change of the tread can be suppressed.

Furthermore, since the density of the band cord of the full band is lower in the central region than in each end region, the difference in dimensional change between the center portion of the tread, at which a dimensional change is relatively less likely to occur, and each shoulder portion of the tread, at which a dimensional change is relatively likely to occur, is small.

Therefore, although this tire is a tire having low flatness and having high stiffness of a center portion of a tread, this tire has good uneven wear resistance.

(2) In the heavy duty pneumatic tire according to (1) above, preferably,
a width of the central region is not less than 20% of a width of a tread surface, and
each end of the central region is located inward of the shoulder circumferential groove in the axial direction.

(3) In the heavy duty pneumatic tire according to (1) or (2) above, preferably, the density of the band cord in each of the end regions is not less than 1.2 times and not greater than 2.0 times the density of the band cord in the central region.

(4) In the heavy duty pneumatic tire according to any one of (1) to (3) above, preferably, a distance from the equator of the tire to the shoulder circumferential groove is not less than 45% and not greater than 70% of a distance from the equator of the tire to an end of the tread surface.

(5) In the heavy duty pneumatic tire according to any one of (1) to (4) above, preferably, a width of the land portion including the equator of the tire is not less than 5% and not greater than 65% of the width of the tread surface.

(6) In the heavy duty pneumatic tire according to (5) above, preferably, the width of the land portion including the equator of the tire is not less than 12% of the width of the tread surface.

(7) In the heavy duty pneumatic tire according to any one of (1) to (6) above, preferably, a density of the band cord of each of the edge bands is higher than or equal to the density of the band cord in each of the end regions of the full band.

(8) In the heavy duty pneumatic tire according to any one of (1) to (7) above, preferably, a width of each of the edge bands is not less than 15% and not greater than 40% of a distance from the equator of the tire to the end of the full band.

(9) In the heavy duty pneumatic tire according to any one of (1) to (8) above, preferably,
at least three circumferential grooves are formed on the tread, and
a width of at least one circumferential groove among the circumferential grooves formed inward of the shoulder circumferential groove in the axial direction is narrower than a width of the shoulder circumferential groove.

(10) In the heavy duty pneumatic tire according to any one of (1) to (9) above, preferably,
at least three circumferential grooves are formed on the tread, and
a depth of at least one circumferential groove among the circumferential grooves formed inward of the shoulder circumferential groove in the axial direction is shallower than a depth of the shoulder circumferential groove.

(11) In the heavy duty pneumatic tire according to any one of (1) to (10) above, preferably, a distance in the axial direction from the shoulder circumferential groove to the end of the full band is not less than 10% and not greater than 50% of a width of the shoulder land portion.

(12) In the heavy duty pneumatic tire according to any one of (1) to (11) above, preferably, a distance in the axial direction from each end of the full band to the inner end of each of the edge bands is not less than 10 mm.

(13) In the heavy duty pneumatic tire according to any one of (1) to (12) above, preferably, each end of the full band is located inward of an end of the belt in the axial direction.

(14) In the heavy duty pneumatic tire according to any one of (1) to (13) above, preferably, at least one belt ply among the plurality of belt plies is located inward of the full band in the radial direction.

According to the present invention, it is possible to provide a low-flatness heavy duty pneumatic tire having a low degree of dimensional change of a tread and having a small difference between the dimensional change of a center portion of the tread and the dimensional change of each shoulder portion of the tread. Such a heavy duty pneumatic tire has good uneven wear resistance.

### BRIEF DESCRIPTION OF THE DRAWINGS

FIG. 1 is a cross-sectional view showing a part of a heavy duty pneumatic tire according to one embodiment of the present invention;
FIG. 2 is an enlarged cross-sectional view showing a part of the tire in FIG. 1; and
FIG. 3 is a schematic diagram illustrating the configuration of a reinforcing layer.

### DETAILED DESCRIPTION

Hereinafter, the present invention will be described in detail based on preferred embodiments with appropriate reference to the drawings.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, the "nominal aspect ratio" is the "nominal aspect ratio" included in the "tire designation" specified in JIS D4202 "Automobile tyres-Designation and dimensions".

In the present invention, the tread of the tire is a portion of the tire that comes into contact with a road surface. In the tire, an axially outer portion from each shoulder circumferential groove of the tread (including the shoulder circumferential groove) is a shoulder portion. In addition, a portion interposed between the shoulder portions of the tread is a center portion.

In the present invention, the number of cross-sections of cords (the number of cords) included per 5 cm width of a tire component including aligned cords is represented as the density of cords included in this component (unit: ends/5 cm). Unless otherwise specified, the density of the cords is obtained in a cross-section of the component obtained by cutting the component along a plane perpendicular to the longitudinal direction of the cords.

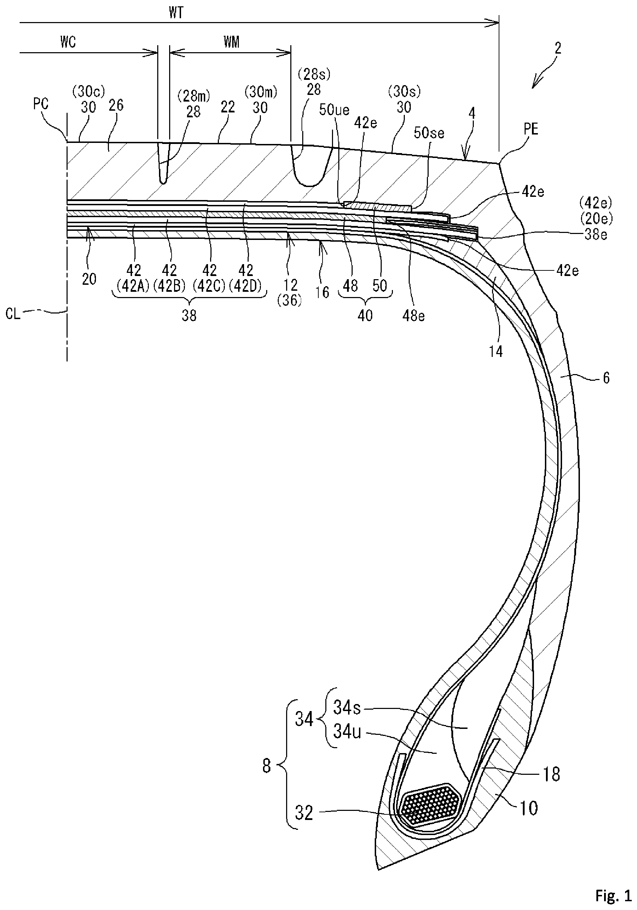

FIG. 1 shows a part of a heavy duty pneumatic tire 2 (hereinafter also referred to simply as "tire 2") according to one embodiment of the present invention. The tire 2 is mounted to a vehicle such as a truck and a bus. The nominal aspect ratio of the tire 2 is not greater than 65%. In other words, the tire 2 has a nominal aspect ratio of not greater than 65%. The tire 2 is a low-flatness tire.

FIG. 1 shows a part of a cross-section (hereinafter referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

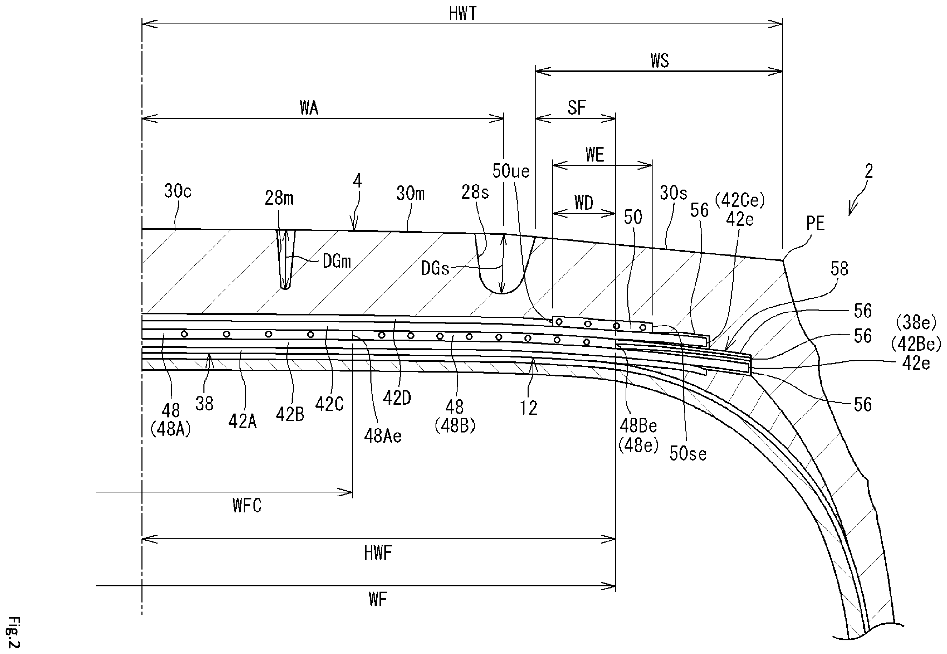

FIG. 2 shows a part of the cross-section of the tire 2 shown in FIG. 1. FIG. 2 shows a tread 4 of the tire 2. In FIG. 2, the right-left direction is the axial direction of the tire 2, and the up-down direction is the radial direction of the tire 2. The direction perpendicular to the surface of the drawing sheet of FIG. 2 is the circumferential direction of the tire 2.

The tire 2 is fitted onto a rim (not shown). The rim is a standardized rim. The interior of the tire 2 is filled with air to adjust the internal pressure of the tire 2. The tire 2 fitted on the rim is also referred to as a tire-rim assembly. The tire-rim assembly includes the rim and the tire 2 fitted on the rim.

The tire 2 includes the tread 4, a pair of sidewalls 6, a pair of beads 8, a pair of chafers 10, a carcass 12, a pair of cushion layers 14, an inner liner 16, a pair of steel fillers 18, and a reinforcing layer 20.

The tread 4 comes into contact with a road surface at an outer surface thereof. This outer surface is a tread surface 22. In FIG. 1, reference character PC indicates the point of intersection of the tread surface 22 and the equator plane CL. The point of intersection PC is the equator of the tire 2.

In FIG. 1, reference character PE indicates an end of the tread surface 22. A double-headed arrow WT indicates the width of the tread surface 22. The width WT of the tread surface 22 is represented as the distance in the axial direction from one end PE of the tread surface 22 to another end PE of the tread surface 22.

Although not shown, the tread 4 can include a base portion and a cap portion located radially outward of the base portion.

In this case, each of the base portion and the cap portion is formed from a crosslinked rubber. The base portion is formed from a crosslinked rubber that has low heat generation properties. The cap portion is formed from a crosslinked rubber for which wear resistance, low temperature properties, and grip performance are taken into consideration.

In the tire 2, at least two circumferential grooves 28 are formed on the tread 4. On the tread 4 of the tire 2 shown in FIG. 1, four circumferential grooves 28 are formed. These circumferential grooves 28 are aligned in the axial direction and extend continuously in the circumferential direction.

Among the four circumferential grooves 28 formed on the tread 4, the circumferential groove 28 located on each outer side in the axial direction is a shoulder circumferential groove 28s. The circumferential groove 28 located inward of the shoulder circumferential groove 28s in the axial direction is a middle circumferential groove 28m. In the tire 2, the four circumferential grooves 28 include a pair of the middle circumferential grooves 28m and a pair of the shoulder circumferential grooves 28s.

In the tire 2, from the viewpoint of ensuring the stiffness of the center portion of the tread 4, the width of each middle circumferential groove 28m is preferably narrower than the width of each shoulder circumferential groove 28s.

In the tire 2, the width of the middle circumferential groove 28m is preferably not less than 5% and not greater than 35% of the width of the shoulder circumferential groove 28s.

In the tire 2, the width of the middle circumferential groove 28m is preferably not greater than 2% of the width WT of the tread surface 22. The lower limit of the width of the middle circumferential groove 28m is, for example, 1 mm.

The width of each circumferential groove 28 is represented as the shortest distance between one edge and another edge of the circumferential groove 28.

In FIG. 2, a double-headed arrow DGm indicates the depth of the middle circumferential groove 28m. A double-headed arrow DGs indicates the depth of the shoulder circumferential groove 28s.

In the tire 2, from the viewpoint of ensuring the stiffness of the center portion of the tread 4, the depth DGm of the middle circumferential groove 28m is preferably equal to the depth DGs of the shoulder circumferential groove 28s or shallower than the depth DGs of the shoulder circumferential groove 28s. The depth DGm of the middle circumferential groove 28m is more preferably shallower than the depth DGs of the shoulder circumferential groove 28s.

In the tire 2, the depth DGm of the middle circumferential groove 28m is preferably not less than 60% and not greater than 100% of the depth DGs of the shoulder circumferential groove 28s.

The depth DGs of the shoulder circumferential groove 28s is, for example, not less than 10 mm and not greater than 25 mm.

The depth of each circumferential groove 28 is represented as the distance from the tread surface 22 to the bottom of the circumferential groove 28.

In FIG. 2, a double-headed arrow WA indicates the distance from the equator PC of the tire 2 to the shoulder circumferential groove 28s. The distance WA is the distance in the axial direction between the equator PC and the bottom of the shoulder circumferential groove 28s.

In the tire 2, the distance WA from the equator PC to the shoulder circumferential groove 28s is preferably not less than 45% and not greater than 70% of a distance HWT in the axial direction from the equator PC to the end PE of the tread surface 22.

This case is suitable for improving the uneven wear resistance of the tread 4.

The opening of the shoulder circumferential groove 28s during inflation increases as the distance from the shoulder circumferential groove 28s to the equator PC of the tire 2 increases. Therefore, if the distance WA exceeds 70% of the distance HWT, the shoulder circumferential groove 28s is excessively separated from the equator PC, so that the opening of the shoulder circumferential groove 28s increases, and a dimensional change around the shoulder circumferential groove 28s increases. As a result, uneven wear is likely to occur. If the distance WA exceeds 70% of the distance HWT, the width of a shoulder land portion 30s becomes relatively narrower, and the ground-contact pressure at this portion locally increases. Therefore, from this point of view, uneven wear is also likely to occur.

On the other hand, if the distance WA is less than 45% of the distance HWT, the width of a center land portion 30c described later tends to become narrower, and it is difficult to ensure sufficient stiffness of the center portion of the tread 4.

The distance HWT in the axial direction from the equator PC of the tire 2 to the end PE of the tread surface 22 is half the width WT of the tread surface 22.

As described above, at least two circumferential grooves 28 are formed on the tread 4 of the tire 2. Accordingly, at least three land portions 30 are formed in the tread 4. On the tread 4 of the tire 2 shown in FIG. 1, four circumferential grooves 28 are formed, so that five land portions 30 are formed therein. These land portions 30 are aligned in the axial direction and extend continuously in the circumferential direction.

In the tire 2, from the viewpoint of increasing the stiffness of the center portion of the tread 4, at least one land portion of the at least three land portions 30 is a land portion including the equator PC of the tire 2.

Among the five land portions 30 formed in the tread 4, the land portion 30 including the equator PC of the tire 2 is the center land portion 30c. The land portion 30 located on each outer side in the axial direction is the shoulder land portion 30s. The shoulder land portion 30s is located outward of the shoulder circumferential groove 28s in the axial direction and includes the end PE of the tread surface 22. The land portion 30 located between the center land portion 30c and the shoulder land portion 30s in the axial direction is a middle land portion 30m. The shoulder circumferential groove 28s is present between the middle land portion 30m and the shoulder land portion 30s. The middle circumferential groove 28m is present between the middle land portion 30m and the center land portion 30c. In the tire 2 shown in FIGS. 1 and 2, the five land portions 30 include the center land portion 30c, a pair of the middle land portions 30m, and a pair of the shoulder land portions 30s.

In the case where the tire 2 includes three land portions 30, the land portions 30 include a center land portion 30c and a pair of shoulder land portions 30s.

In the case where the tire 2 includes six or more land portions 30, the land portions 30 include a center land portion 30c, a pair of shoulder land portions 30s, and three or more middle land portions 30m.

The center land portion 30c is a land portion including the equator PC of the tire 2. In the tire 2 including the center land portion 30c, the stiffness of the center portion of the tread 4 is high. In the tire 2, a dimensional change is less likely to occur at the center portion of the tread 4 than in a tire in which a circumferential groove is located on the equator plane CL thereof, and the tire 2 is suitable as an LRR tire.

In FIGS. 1 and 2, a double-headed arrow WC indicates the width of the center land portion 30c. A double-headed arrow WM indicates the width of the middle land portion 30m. A double-headed arrow WS indicates the width of the shoulder land portion 30s.

In the tire 2, the width WC of the center land portion 30c is preferably not less than 5% and preferably not greater than 65% of the width WT of the tread surface 22.

If the width WC is less than 5% of the width WT, sufficient stiffness of the center portion of the tread 4 cannot be ensured.

If the width WC exceeds 65% of the width WT, the position of the shoulder circumferential groove 28s is greatly separated from the equator PC of the tire 2. Therefore, the shoulder circumferential groove 28s becomes easier to open, and a dimensional change around the shoulder circumferential groove 28s becomes larger. As a result, uneven wear is likely to occur. In addition, the width WS of the shoulder land portion 30s becomes relatively narrower, and the ground-contact pressure at this portion locally increases. Therefore, from this point of view, uneven wear is also likely to occur.

The width WM of the middle land portion 30m is not less than 5% and not greater than 18% of the width WT of the tread surface 22. The width WS of the shoulder land portion 30s is not less than 7.5% and not greater than 25% of the width WT of the tread surface 22.

The width of each land portion 30 is represented as the width in the axial direction of the top surface of the land portion 30 that forms a part of the tread surface 22. Therefore, the width WC of the center land portion 30c is represented as the distance in the axial direction from one end to another end of the top surface of the center land portion 30c (distance in the axial direction between the inner edges of the middle circumferential grooves 28m). The width WM of the middle land portion 30m is represented as the distance in the axial direction from the inner end of the top surface of the middle land portion 30m (outer edge of the middle circumferential groove 28m) to the outer end of this top surface (inner edge of the shoulder circumferential groove 28s). The width WS in the axial direction of the shoulder land portion 30s is represented as the distance in the axial direction from the inner end of the top surface of the shoulder land portion 30s (outer edge of the shoulder circumferential groove 28s) to the outer end of this top surface (end PE of the tread surface 22 in the tire 2).

The width WC of the center land portion 30c is more preferably not less than 12% of the width WT of the tread surface 22. In this case, since the width WC of the center land portion 30c is wide, the stiffness of the center portion of the tread 4 in the tire 2 becomes higher. Therefore, the tire 2 is suitable as a tire including the reinforcing layer 20 having a configuration described later.

The width WC of the center land portion 30c is more preferably not greater than 50% of the width WT of the tread surface 22.

Each sidewall 6 is connected to an end of the tread 4. The sidewall 6 extends radially inward from the end of the tread 4. The sidewall 6 is formed from a crosslinked rubber.

Each bead 8 is located radially inward of the sidewall 6. The bead 8 includes a core 32 and an apex 34.

The core 32 extends in the circumferential direction. The core 32 includes a wound wire made of steel. The core 32 has a substantially hexagonal cross-sectional shape.

The apex 34 is located radially outward of the core 32. The apex 34 includes an inner apex 34u and an outer apex 34s. The inner apex 34u extends outward in the radial direction from the core 32. The outer apex 34s is located radially outward of the inner apex 34u. The inner apex 34u is formed from a hard crosslinked rubber. The outer apex 34s is formed from a crosslinked rubber that is more flexible than the inner apex 34u. The outer apex 34s is more flexible than the inner apex 34u.

Each chafer 10 is located axially outward of the bead 8. The chafer 10 is located radially inward of the sidewall 6. The chafer 10 comes into contact with a rim (not shown). The chafer 10 is formed from a crosslinked rubber for which wear resistance is taken into consideration.

The carcass 12 is located inward of the tread 4, the sidewalls 6, and the chafers 10. The carcass 12 includes at least one carcass ply 36. The carcass 12 of the tire 2 is composed of one carcass ply 36. The carcass ply 36 is turned up around each core 32 from the inner side toward the outer side in the axial direction.

The carcass ply 36 includes a large number of carcass cords aligned with each other, which are not shown. These carcass cords are covered with a topping rubber. Each carcass cord intersects the equator plane CL. In the tire 2, an angle of the carcass cord with respect to the equator plane CL is not less than 70° and not greater than 90°. The carcass 12 has a radial structure. In the tire 2, a steel cord is used as each carcass cord.

Each cushion layer 14 is located between the reinforcing layer 20 and the carcass 12 at an end of the reinforcing layer 20. The cushion layer 14 is formed from a flexible crosslinked rubber.

The inner liner 16 is located inward of the carcass 12. The inner liner 16 forms an inner surface of the tire 2. The inner liner 16 is formed from a crosslinked rubber that has an excellent air blocking property. The inner liner 16 maintains the internal pressure of the tire 2.

Each steel filler 18 is located in a portion at the bead 8. The steel filler 18 is turned up around the core 32 from the inner side toward the outer side in the axial direction along the carcass ply 36.

The steel filler 18 includes a large number of filler cords aligned with each other, which are not shown. In the steel filler 18, the filler cords are covered with a topping rubber. In the tire 2, a steel cord is used as each filler cord.

As shown in FIGS. 1 and 2, the reinforcing layer 20 is located inward of the tread 4 in the radial direction. The reinforcing layer 20 is located between the carcass 12 and the tread 4. The reinforcing layer 20 includes a belt 38 and a band 40.

The belt 38 includes a plurality of belt plies 42 aligned in the radial direction. Each belt ply 42 is placed such that both ends thereof are opposed to each other across the equator plane CL. The belt 38 of the tire 2 includes four belt plies 42. The four belt plies 42 include a first belt ply 42A located on the inner side in the radial direction, a second belt ply 42B located outward of the first belt ply 42A, a third belt ply 42C located outward of the second belt ply 42B, and a fourth belt ply 42D located outward of the third belt ply 42C.

In the tire 2, the second belt ply 42B has a widest width in the axial direction, and the fourth belt ply 42D has a narrowest width in the axial direction. The first belt ply 42A and the third belt ply 42C have the same width in the axial direction, or the width in the axial direction of the first belt ply 42A is wider than the width in the axial direction of the third belt ply 42C.

An end 38e of the belt 38 of the tire 2 is represented as an end of the belt ply 42 having a widest width in the axial direction among the plurality of belt plies 42 included in the belt 38. In the tire 2, as described above, among the four belt plies 42 included in the belt 38, the second belt ply 42B has a widest width in the axial direction. The end 38e of the belt 38 of the tire 2 is represented as an end 42Be of the second belt ply 42B having a widest width in the axial direction. The end 38e of the belt 38 is also an end 20e of the reinforcing layer 20.

As shown in FIGS. 1 and 2, in the tire 2, each of ends 42e of the first belt ply 42A to the fourth belt ply 42D is located outward of the shoulder circumferential groove 28s in the axial direction.

In the tire 2, from the viewpoint of ensuring the stiffness of the tread 4 portion, the ratio of the width in the axial direction of each belt ply 42 to the width WT of the tread surface 22 is preferably in the following range.

The ratio of the width in the axial direction of the first belt ply 42A to the width WT of the tread surface 22 is preferably not less than 0.80 and preferably not greater than 0.90.

The ratio of the width in the axial direction of the second belt ply 42B to the width WT of the tread surface 22 is preferably not less than 0.85 and preferably not greater than 0.95.

The ratio of the width in the axial direction of the third belt ply 42C to the width WT of the tread surface 22 is preferably not less than 0.80 and preferably not greater than 0.90.

The ratio of the width in the axial direction of the fourth belt ply 42D to the width WT of the tread surface 22 is preferably not less than 0.55 and preferably not greater than 0.65.

The width of each belt ply 42 is represented as the distance in the axial direction from one end 42e to another end 42e of the belt ply 42.

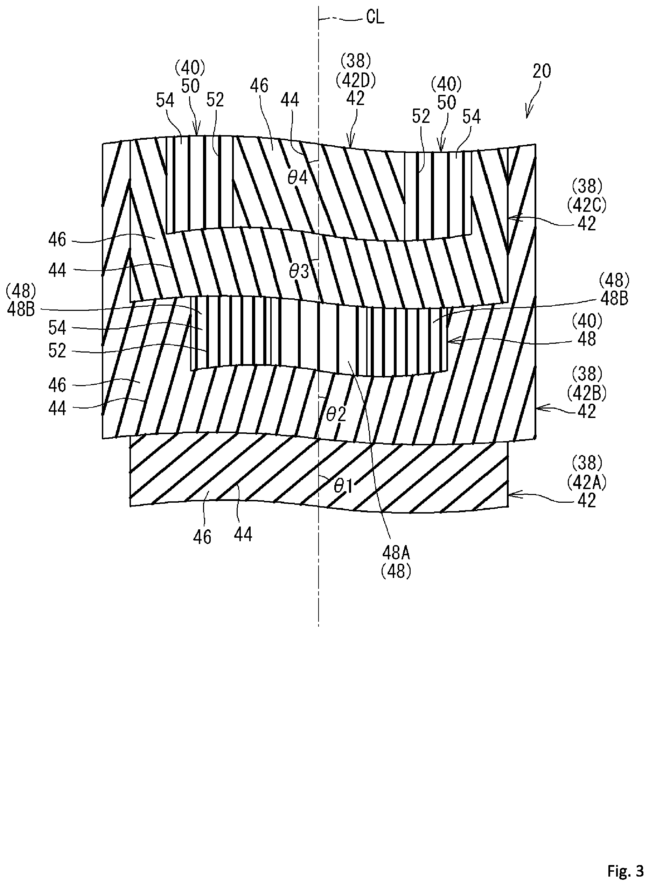

FIG. 3 shows the configuration of the reinforcing layer 20.

In FIG. 3, the right-left direction is the axial direction of the tire 2, and the up-down direction is the circumferential direction of the tire 2. The direction perpendicular to the surface of the drawing sheet of FIG. 3 is the radial direction of the tire 2. The front side of the drawing sheet of FIG. 3 is the outer side in the radial direction, and the back side of this drawing sheet is the inner side in the radial direction.

As shown in FIG. 3, in the tire 2, each belt ply 42 included in the belt 38 includes a large number of belt cords 44 aligned with each other. In FIG. 3, the belt cords 44 are represented by solid lines for convenience of description, but the belt cords 44 are covered with a topping rubber 46. The belt cords 44 of the tire 2 are steel cords.

In the tire 2, the density of the belt cords 44 (the number of cross-sections of cords per unit width) in each belt ply 42 is preferably not less than 15 ends/5 cm and not greater than 30 ends/5 cm.

In each belt ply 42, the belt cords 44 are inclined with respect to the circumferential direction.

The direction of inclination of the belt cords 44 included in the first belt ply 42A with respect to the circumferential direction (hereinafter referred to as inclination direction of the first belt ply 42A) is the same as the direction of inclination of the belt cords 44 included in the second belt ply 42B with respect to the circumferential direction (hereinafter referred to as inclination direction of the second belt ply 42B).

The inclination direction of the second belt ply 42B is opposite to the direction of inclination of the belt cords 44 included in the third belt ply 42C with respect to the circumferential direction (hereinafter referred to as inclination direction of the third belt ply 42C).

The inclination direction of the third belt ply 42C is the same as the direction of inclination of the belt cords 44 included in the fourth belt ply 42D with respect to the circumferential direction (hereinafter referred to as inclination direction of the fourth belt ply 42D).

The inclination direction of the first belt ply 42A may be opposite to the inclination direction of the second belt ply 42B, and the inclination direction of the fourth belt ply 42D may be opposite to the inclination direction of the third belt ply 42C. From the viewpoint of ensuring a stable ground-contact shape, the inclination direction of the second belt ply 42B is preferably opposite to the inclination direction of the third belt ply 42C.

In FIG. 3, an angle θ1 is an inclination angle of the belt cords 44 included in the first belt ply 42A with respect to the equator plane CL (hereinafter referred to as first inclination angle θ1). An angle θ2 is an inclination angle of the belt cords 44 included in the second belt ply 42B with respect to the equator plane CL (hereinafter referred to as second inclination angle θ2). An angle θ3 is an inclination angle of the belt cords 44 included in the third belt ply 42C with respect to the equator plane CL (hereinafter referred to as third inclination angle θ3). An angle θ4 is an inclination angle of the belt cords 44 included in the fourth belt ply 42D with respect to the equator plane CL (hereinafter referred to as fourth inclination angle θ4).

In the tire 2, the first inclination angle θ1, the second inclination angle θ2, the third inclination angle θ3, and the fourth inclination angle θ4 are preferably not less than 10° and preferably not greater than 60°. From the viewpoint of effectively restricting the movement of the tire 2 and ensuring a stable ground-contact shape, the first inclination angle θ1 is preferably not less than 40° and preferably not greater than 60°. The second inclination angle θ2 is preferably not less than 10° and preferably not greater than 20°. The third inclination angle θ3 is preferably not less than 10° and preferably not greater than 20°. The fourth inclination angle θ4 is preferably not less than 10° and preferably not greater than 60°.

The band 40 includes a full band 48 and a pair of edge bands 50.

As shown in FIGS. 1 to 3, the full band 48 has ends 48e opposed to each other across the equator plane CL. The pair of edge bands 50 are placed so as to be spaced apart from each other in the axial direction with the equator plane CL therebetween. In the tire 2, the fourth belt ply 42D which forms a part of the belt 38 is located between the right and left edge bands 50.

Each edge band 50 is located between the tread 4 and the full band 48. The edge band 50 is located outward of the end 48e of the full band 48 in the radial direction. An inner end 50ue of the edge band 50 is located inward of the end 48e of the full band 48 in the axial direction. An outer end 50se of the edge band 50 is located outward of the end 48e of the full band 48 in the axial direction. The position of the outer end 50se of the edge band 50 may coincide with the position of the end 48e of the full band 48 in the axial direction. The edge band 50 overlaps the end 48e of the full band 48 in the radial direction.

As shown in FIGS. 2 and 3, the full band 48 includes two end regions 48B each located on the outer side in the axial direction, and a central region 48A interposed between the two end regions 48B. The central region 48A is located axially inward of each end region 48B.

In the tire 2, both end portions 48Ae of the central region 48A are located axially inward of the shoulder circumferential grooves 28s. Both end portions 48Ae of the central region 48A do not overlap the shoulder circumferential grooves 28s in the radial direction.

If each end portion 48Ae overlaps the shoulder circumferential groove 28s in the radial direction, the stiffness difference of the lower side (radially inner side) of the shoulder circumferential groove 28s increases, so that bending of the groove bottom is promoted and strain is likely to accumulate at the groove bottom. Therefore, there is a concern about occurrence of tread groove cracking (TGC) or a decrease in the durability of the tire 2. In addition, due to the promotion of bending of the groove bottom of the shoulder circumferential groove 28s, the shoulder land portion 30s becomes easier to move, and track wear is more likely to occur on the axially inner side of the shoulder land portion 30s. Furthermore, if each end portion 48Ae is located axially outward of the shoulder circumferential groove 28s, a dimensional change of the shoulder portion of the tread 4 cannot be sufficiently suppressed.

Furthermore, it is preferable that both end portions 48Ae of the central region 48A do not overlap the middle circumferential grooves 28m in the radial direction. If each end portion 48Ae overlaps the middle circumferential groove 28m in the radial direction, strain is likely to accumulate at the groove bottom of the middle circumferential groove 28m, and in this case as well, there is a concern about occurrence of TGC or a decrease in the durability of the tire 2.

It is preferable that both end portions 48Ae of the central region 48A are located between the middle circumferential grooves 28m and the shoulder circumferential grooves 28s in the axial direction.

In the tire 2, an axially outer end portion 48Be of each end region 48B is located axially outward of the shoulder circumferential groove 28s. The axially outer end portion 48Be of each end region 48B does not overlap the shoulder circumferential groove 28s in the radial direction.

The axially outer end portion 48Be of each end region 48B is also the end 48e of the full band 48.

In FIG. 2, a double-headed arrow WF indicates the width of the full band 48. The width WF of the full band 48 is represented as the distance in the axial direction from one end 48e to another end 48e of the full band 48. A double-headed arrow WFC indicates the width of the central region 48A. The width WFC of the central region 48A is represented as the distance in the axial direction from one end 48Ae to another end 48Ae of the central region 48A.

The width WFC of the central region 48A is preferably not less than 20% of the width WT of the tread surface 22. If the width WFC is less than 20% of the width WT, a dimensional change of the center portion of the tread 4 is likely to be excessively suppressed.

As shown in FIG. 3, the full band 48 and the pair of edge bands 50 included in the band 40 each include a helically wound band cord 52. In FIG. 3, each band cord 52 is represented by a solid line for convenience of description, but each band cord 52 is covered with a topping rubber 54.

In the tire 2, each band cord 52 is a steel cord or a cord formed from an organic fiber (hereinafter referred to as organic fiber cord). In the case where an organic fiber cord is used as each band cord 52, examples of the organic fiber include nylon fibers, polyester fibers, rayon fibers, and aramid fibers. From the viewpoint of stiffness, each band cord 52 is preferably a steel cord.

In the tire 2, as the band cord 52 of the full band 48 and the band cord 52 of each edge band 50, the same cord may be used or different cords may be used. The band cords 52 used for the full band 48 and each edge band 50 are determined according to the specifications of the tire 2.

As described above, the full band 48 includes the helically wound band cord 52. The full band 48 has a jointless structure. In the full band 48, an angle of the band cord 52 with respect to the circumferential direction is preferably not greater than 5° and more preferably not greater than 2°. The band cord 52 of the full band 48 extends substantially in the circumferential direction.

In the full band 48, the same band cord may be continuously wound in the central region 48A and each end region 48B, or different band cords may be wound in the central region 48A and each end region 48B.

As described above, each edge band 50 includes the helically wound band cord 52. The edge band 50 has a jointless structure. In the edge band 50, an angle of the band cord 52 with respect to the circumferential direction is preferably not greater than 5° and more preferably not greater than 2°. The band cord 52 of the edge band 50 extends substantially in the circumferential direction.

In the tire 2, the density of the band cord 52 in the central region 48A (hereinafter also referred to as band central density) is lower than the density of the band cord 52 in each end region 48B (hereinafter also referred to as band end density). Specifically, in the full band 48 of the tire 2, the number of cross-sections of the band cord 52 per 5 cm width is smaller in the central region 48A than in each end region 48B.

In the tire 2, the band end density is preferably not less than 1.2 times and preferably not greater than 2.0 times the band central density. This case is suitable for reducing the difference in dimensional change between each shoulder portion of the tread 4 and the center portion of the tread 4.

If the band end density is less than 1.2 times the band central density, the force to constrain the center portion by the full band 48 is high in a tire in which the stiffness of a center portion is high such as the tire 2. Therefore, although the edge bands 50 are included, a dimensional change is more likely to occur at each shoulder portion than at the center portion, so that it is difficult to make the ground-contact pressure of the tire uniform.

On the other hand, if the band end density exceeds 2.0 times the band central density, even in a tire in which the stiffness of a center portion is high such as the tire 2, the stiffness difference between the center portion and each shoulder portion of the tread is large, so that a portion at each shoulder circumferential groove 28s becomes easier to bend. If the portion at each shoulder circumferential groove 28s becomes easier to bend, strain is likely to accumulate at the shoulder circumferential groove 28s, and the accumulated strain becomes a cause of TGC or a factor of a decrease in durability.

In addition, if the portion at each shoulder circumferential groove 28s becomes easier to bend, the shoulder land portion 30s becomes easier to move, and as a result, an axially inner portion of the shoulder land portion 30s becomes easily worn.

In the full band 48, the band central density is preferably not less than 10 ends/5 cm and not greater than 30 ends/5 cm.

In each edge band 50, the density of the band cord 52 is preferably equal to or higher than the band end density of the full band 48.

In this case, the edge band 50 is suitable for suppressing a dimensional change of the shoulder portion of the tread 4 by the effect of suppressing a break of the band cord 52 of the full band 48 and the constraining force applied to the tread 4 by the edge band 50.

In each edge band 50, the density of the band cord 52 is preferably not less than 20 ends/5 cm and not greater than 35 ends/5 cm. The density of the band cord 52 of the edge band 50 is represented as the number of cross-sections of the band cord 52 included per 5 cm width of the edge band 50 in a cross-section of the edge band 50 along a plane perpendicular to the direction in which the band cord 52 extends.

In the tire 2, each of the end 42Be of the second belt ply 42B and an end 42Ce of the third belt ply 42C is covered with a rubber layer 56. Between the end 42Be of the second belt ply 42B and the end 42Ce of the third belt ply 42C covered with the rubber layer 56, two rubber layers 56 are further placed. In the tire 2, an edge member 58 including four rubber layers 56 in total is formed between the end 42Be of the second belt ply 42B and the end 42Ce of the third belt ply 42C.

The edge member 58 is formed from a crosslinked rubber. The edge member 58 contributes to maintaining the interval between the end 42Be of the second belt ply 42B and the end 42Ce of the third belt ply 42C. In the tire 2, a change in the positional relationship between the end 42Be of the second belt ply 42B and the end 42Ce of the third belt ply 42C due to running is suppressed. The edge member 58 is a part of the reinforcing layer 20. The reinforcing layer 20 of the tire 2 includes a pair of edge members 58 in addition to the belt 38 and the band 40.

As described above, the full band 48 has the ends 48e opposed to each other across the equator plane CL. The full band 48 extends in the axial direction from the equator plane CL to each end 48e. Each end 48e of the full band 48 is located outward of the shoulder circumferential groove 28s in the axial direction. The full band 48 is located inward of each shoulder circumferential groove 28s in the radial direction.

Although the tire 2 has low flatness, the full band 48 effectively suppresses deformation around each shoulder circumferential groove 28s. A change in the shape of the tire 2, e.g., the contour of the carcass 12 (also referred to as case line), is suppressed, so that a change in ground-contact shape is suppressed.

In the tire 2, as described above, the full band 48 includes the central region 48A in which the density of the band cord 52 is relatively low, and the end regions 48B in each of which the density of the band cord 52 is relatively high. Furthermore, the pair of edge bands 50 spaced apart from each other in the axial direction with the equator plane CL therebetween are also included. Therefore, in the tread 4, the difference between the dimensional change of the center portion and the dimensional change of each shoulder portion can be reduced, so that occurrence of uneven wear can be suppressed.

Furthermore, in the tire 2, each edge band 50 is located outward of the end 48e of the full band 48 in the radial direction. The edge band 50 constrains the end 48e of the full band 48. Fluctuation of the tension of the band cord 52 included in the full band 48 is suppressed, so that occurrence of a break of the band cord 52 due to this tension fluctuation is suppressed. The full band 48 of the tire 2 can stably exhibit the function of suppressing a dimensional change. The edge band 50 is narrower than the full band 48. Therefore, tension fluctuation as in the full band 48 is less likely to occur in the band cord 52 of the edge band 50. A break is less likely to occur in the band cord 52 of the edge band 50.

In FIG. 2, a double-headed arrow WE indicates the width of the edge band 50. The width of the edge band 50 is represented as the distance in the axial direction from the inner end 50ue to the outer end 50se of the edge band 50. In the tire 2, the width WE of the edge band 50 is preferably not less than 15% and not greater than 40% of a half (also referred to as 1/2 width) HWF of the width WF of the full band 48. In this case, the edge band 50 can exhibit the effect caused by providing an edge band, without suppressing a dimensional change of the center portion of the tread 4.

If the width WE of the edge band 50 is less than 15% of the 1/2 width HWF of the full band 48, the force to suppress a dimensional change of the shoulder portion by the edge band 50 becomes weaker. Therefore, the edge band 50 cannot sufficiently exhibit its effect in some cases. On the other hand, if the width WE of the edge band 50 exceeds 40% of the 1/2 width HWF of the full band 48, the effect of suppressing a dimensional change tends to be exhibited for not only each shoulder portion of the tread 4 but also the center portion. Therefore, the difference in dimensional change between each shoulder portion and the center portion is not reduced, so that it is difficult to improve uneven wear resistance.

In the tire 2, a dimensional change of the tire 2 itself during running is suppressed by the full band 48 and each edge band 50. Furthermore, the difference between the dimensional change of the center portion and the dimensional change of each shoulder portion in the tread 4 is reduced to be small. In the tire 2, occurrence of uneven wear, which is a concern in conventional tires, is suppressed.

In FIG. 2, a double-headed arrow SF indicates the distance in the axial direction from the shoulder circumferential groove 28s, specifically, the outer edge of the shoulder circumferential groove 28s, to the end 48e of the full band 48.

In the tire 2, the distance SF in the axial direction from the shoulder circumferential groove 28s to the end 48e of the full band 48 is preferably not less than 10% of the width WS in the axial direction of the shoulder land portion 30s.

In this case, the end 48e of the full band 48 is located at an appropriate interval from the bottom of the shoulder circumferential groove 28s. In the tire 2, occurrence of damage starting from the bottom of the shoulder circumferential groove 28s is suppressed. In addition, since the width of the full band 48 is ensured, the full band 48 contributes to suppression of a dimensional change of the tread 4. From this viewpoint, the distance SF is more preferably not less than 15% of the width WS.

In the tire 2, the distance SF in the axial direction from the shoulder circumferential groove 28s to the end 48e of the full band 48 is preferably not greater than 50% of the width WS in the axial direction of the shoulder land portion 30s.

In this case, the end 48e of the full band 48 is located away from the end portion of the tread 4 which moves actively during running, so that fluctuation of the tension of the band cord 52 included in the full band 48 is suppressed. In the tire 2, occurrence of a break of the band cord 52 included in the full band 48 is suppressed. The full band 48 of the tire 2 contributes to suppression of a dimensional change. From this viewpoint, the distance SF is more preferably not greater than 35% of the width WS and further preferably not greater than 25% of the width WS.

In FIG. 2, a double-headed arrow WD indicates the distance in the axial direction from the end 48e of the full band 48 to the inner end 50ue of the edge band 50.

The distance WD in the axial direction is preferably not less than 10 mm. Accordingly, the edge band 50 effectively constrains the end 48e of the full band 48. Fluctuation of the tension of the band cord 52 included in the full band 48 is suppressed, so that occurrence of a break of the band cord 52 due to this tension fluctuation is suppressed. The full band 48 of the tire 2 can more stably exhibit the function of suppressing a shape change. From this viewpoint, the distance WD in the axial direction is more preferably not less than 20 mm.

In the tire 2, the position of the inner end 50ue of the edge band 50 is determined as appropriate in consideration of involvement in occurrence of damage starting from the bottom of the shoulder circumferential groove 28s. Therefore, a preferable upper limit of the distance WD in the axial direction is not set.

In the tire 2, in the axial direction, each end 48e of the full band 48 is located inward of the end 38e of the belt 38, and the belt 38 is wider than the full band 48. In this case, the belt 38 constrains each end 48e of the full band 48. The belt 38 contributes to suppression of fluctuation of the tension of the band cord 52 included in the full band 48. If fluctuation of the tension of the band cord 52 is suppressed, occurrence of a break of the band cord 52 is suppressed, so that the full band 48 can stably exhibit the function of suppressing a dimensional change. From this viewpoint, it is preferable that each end 48e of the full band 48 is located inward of the end 38e of the belt 38 in the axial direction.

A force acts on the full band 48 of the tire 2 so as to spread from the inner side toward the outer side in the radial direction. This force causes tension in the band cord 52 included in the full band 48. In the tire 2, the second belt ply 42B is located radially inward of the full band 48.

In the tire 2, the second belt ply 42B reduces the force acting on the full band 48, so that the tension of the band cord 52 included in the full band 48 is appropriately maintained. The second belt ply 42B contributes to suppression of fluctuation of the tension of the band cord 52. Since the second belt ply 42B is wider than the full band 48, fluctuation of the tension of the band cord 52 is effectively suppressed. In the tire 2, a break is less likely to occur in the band cord 52 of the full band 48. The full band 48 can stably exhibit the function of suppressing a shape change. From this viewpoint, it is preferable that among the plurality of belt plies 42 included in the belt 38, at least one belt ply 42 is located inward of the full band 48 in the radial direction. It is more preferable that the at least one belt ply 42 located inward of the full band 48 has a width wider than the width WF of the full band 48.

In the tire 2, from the viewpoint of suppressing fluctuation of the tension of the band cord 52 of the full band 48 and making it less likely to cause a break of the band cord 52 due to tension fluctuation, it is more preferable that the second belt ply 42B which is wider than the full band 48 is located inward of the full band 48 in the radial direction and the third belt ply 42C which is wider than the full band 48 is located outward of the full band 48 in the radial direction.

Furthermore, from the same viewpoint, in the tire 2, it is further preferable that the first belt ply 42A, the second belt ply 42B, and the third belt ply 42C have a width wider than the width WF of the full band 48, the first belt ply 42A and the second belt ply 42B are located inward of the full band 48 in the radial direction, the third belt ply 42C is located outward of the full band 48 in the radial direction, and the pair of edge bands 50 are each located outward of the third belt ply 42C in the radial direction.

In particular, from the same viewpoint, in the tire 2, it is particularly preferable that the plurality of belt plies 42 included in the belt 38 include the first belt ply 42A located on the inner side in the radial direction, the second belt ply 42B located outward of the first belt ply 42A in the radial direction, and the third belt ply 42C located outward of the second belt ply 42B in the radial direction, the first belt ply 42A, the second belt ply 42B, and the third belt ply 42C have a width wider than the width WF of the full band 48, the first belt ply 42A and the second belt ply 42B are located inward of the full band 48 in the radial direction, the third belt ply 42C is located outward of the full band 48 in the radial direction, and each edge band 50 located outward of the full band 48 overlaps the end 48e of the full band 48 through the third belt ply 42C in the radial direction.

As is obvious from the above description, according to the present invention, the heavy duty pneumatic tire 2 having good uneven wear resistance is obtained. The present invention exhibits a remarkable effect in the heavy duty pneumatic tire 2 having a nominal aspect ratio of not greater than 65% and having high stiffness of the center portion of the tread.

The above-described technology for reducing the difference between the dimensional change of the center portion and the dimensional change of each shoulder portion and achieving improvement of uneven wear resistance can be applied to various tires.

## Claims

1. A heavy duty pneumatic tire (2) having a nominal aspect ratio of not greater than 65%, the heavy duty pneumatic tire (2) comprising:
a tread (4) configured to come into contact with a road surface; and
a reinforcing layer (20) located inward of the tread (4) in a radial direction,
wherein
at least two circumferential grooves (28) are formed on the tread (4) to form at least three land portions (30) aligned in an axial direction,
of the at least two circumferential grooves (28), the circumferential groove (28) located on each outer side in the axial direction is a shoulder circumferential groove (28s),
the land portion (30) located outward of the shoulder circumferential groove (28s) in the axial direction is a shoulder land portion (30s),
one of the at least three land portions (30) is a land portion (30c) including an equator (PC) of the tire (2),
the reinforcing layer (20) includes a belt (38) including a large number of belt cords (44) aligned with each other, and a band (40) including a helically wound band cord (52),
the belt (38) includes a plurality of belt plies (42) aligned in the radial direction,
the band (40) includes a full band (48) having ends (48e) opposed to each other across an equator plane (CL),
the full band (48) includes two end regions (48B) each located on the outer side in the axial direction, and a central region (48A) interposed between the two end regions (48B),
a density of the band cord (52) in the central region (48A) is lower than a density of the band cord (52) in each of the end regions (48B),
each end (48e) of the full band (48) is located outward of the shoulder circumferential groove (28s) in the axial direction,
**characterized in that** the band further includes a pair of edge bands (50) located outward of the ends (48e) of the full band (48) in the radial direction, wherein
an inner end (50ue) of each of the edge bands (50) is located outward of the shoulder circumferential groove (28s) in the axial direction.

2. The heavy duty pneumatic tire (2) according to claim 1, wherein
a width (WFC) of the central region (48A) is not less than 20% of a width (WT) of a tread surface (22), and
each end (48Ae) of the central region (48A) is located inward of the shoulder circumferential groove (28s) in the axial direction.

3. The heavy duty pneumatic tire (2) according to claim 1 or 2, wherein the density of the band cord (52) in each of the end regions (48B) is not less than 1.2 times and not greater than 2.0 times the density of the band cord (52) in the central region (48A).

4. The heavy duty pneumatic tire (2) according to any one of claims 1 to 3, wherein a distance (WA) from the equator (PC) of the tire (2) to the shoulder circumferential groove (28s) is not less than 45% and not greater than 70% of a distance (HWT) from the equator (PC) of the tire (2) to an end (PE) of the tread surface (22).

5. The heavy duty pneumatic tire (2) according to any one of claims 1 to 4, wherein a width (WC) of the land portion (30c) including the equator (PC) of the tire (2) is not less than 5% and not greater than 65% of the width (WT) of the tread surface (22).

6. The heavy duty pneumatic tire (2) according to claim 5, wherein the width (WC) of the land portion (30c) including the equator (PC) of the tire (2) is not less than 12% of the width (WT) of the tread surface (22).

7. The heavy duty pneumatic tire (2) according to any one of claims 1 to 6, wherein a density of the band cord (52) of each of the edge bands (50) is higher than or equal to the density of the band cord (52) in each of the end regions (48B) of the full band (48).

8. The heavy duty pneumatic tire (2) according to any one of claims 1 to 7, wherein a width (WE) of each of the edge bands (50) is not less than 15% and not greater than 40% of a distance from the equator (PC) of the tire (2) to the end (48e) of the full band (48).

9. The heavy duty pneumatic tire (2) according to any one of claims 1 to 8, wherein
at least three circumferential grooves (28) are formed on the tread (4), and
a width of at least one circumferential groove (28m) among the circumferential grooves (28) formed inward of the shoulder circumferential groove (28s) in the axial direction is narrower than a width of the shoulder circumferential groove (28s).

10. The heavy duty pneumatic tire (2) according to any one of claims 1 to 9, wherein
at least three circumferential grooves (28) are formed on the tread (4), and
a depth (DGm) of at least one circumferential groove (28m) among the circumferential grooves (28) formed inward of the shoulder circumferential groove (28s) in the axial direction is shallower than a depth (DGs) of the shoulder circumferential groove (28s).

11. The heavy duty pneumatic tire (2) according to any one of claims 1 to 10, wherein a distance (SF) in the axial direction from the shoulder circumferential groove (28s) to the end (48e) of the full band (48) is not less than 10% and not greater than 50% of a width (WS) of the shoulder land portion (30s).

12. The heavy duty pneumatic tire (2) according to any one of claims 1 to 11, wherein a distance (WD) in the axial direction from each end (48e) of the full band (48) to the inner end (50ue) of each of the edge bands (50) is not less than 10 mm.

13. The heavy duty pneumatic tire (2) according to any one of claims 1 to 12, wherein each end (48e) of the full band (48) is located inward of an end (38e) of the belt (38) in the axial direction.

14. The heavy duty pneumatic tire (2) according to any one of claims 1 to 13, wherein at least one belt ply (42) among the plurality of belt plies (42) is located inward of the full band (48) in the radial direction.

## Patentansprüche

1. Schwerlastluftreifen (2) mit einem Nennaspektverhältnis von nicht mehr als 65 %, wobei der Schwerlastluftreifen (2) umfasst:
eine Lauffläche (4), die konfiguriert ist, um mit einer Straßenoberfläche in Kontakt zu kommen; und
eine Verstärkungsschicht (20), die in einer radialen Richtung innen von der Lauffläche (4) angeordnet ist, wobei
mindestens zwei Umfangsrillen (28) auf der Lauffläche (4) gebildet sind, um mindestens drei Landabschnitte (30) zu bilden, die in einer axialen Richtung ausgerichtet sind,
von den mindestens zwei Umfangsrillen (28) die Umfangsrille (28), die auf jeder Außenseite in der axialen Richtung angeordnet ist, eine Schulterumfangsrille (28s) ist,
der Landabschnitt (30), der in der axialen Richtung außen von der Schulterumfangsrille (28s) angeordnet ist, ein Schulterlandabschnitt (30s) ist,
einer der mindestens drei Landabschnitte (30) ein Landabschnitt (30c) ist, der einen Äquator (PC) des Reifens (2) umfasst,
die Verstärkungsschicht (20) einen Gürtel (38), der eine große Anzahl von Gürtelkorden (44) umfasst, die miteinander ausgerichtet sind, und ein Band (40) umfasst, das einen spiralförmig gewickelten Bandkord (52) umfasst,
der Gürtel (38) eine Vielzahl von Gürtellagen (42) umfasst, die in der radialen Richtung ausgerichtet sind,
das Band (40) ein Vollband (48) umfasst, das Enden (48e) aufweist, die einander über eine Äquatorebene (CL) hinweg gegenüberliegen,
das Vollband (48) zwei Endbereiche (48B), die jeweils auf der Außenseite in der axialen Richtung angeordnet sind, und einen mittleren Bereich (48A) umfasst, der zwischen den beiden Endbereichen (48B) angeordnet ist,
eine Dichte des Bandkords (52) in dem mittleren Bereich (48A) geringer ist als eine Dichte des Bandkords (52) in jedem der Endbereiche (48B),
jedes Ende (48e) des Vollbands (48) in der axialen Richtung außen von der Schulterumfangsrille (28s) angeordnet ist,
**dadurch gekennzeichnet, dass** das Band ferner ein Paar Randbänder (50) umfasst, die in der radialen Richtung außen von den Enden (48e) des Vollbands (48) angeordnet sind, wobei
ein inneres Ende (50ue) von jedem der Randbänder (50) in der axialen Richtung außen von der Schulterumfangsrille (28s) angeordnet ist.

2. Schwerlastluftreifen (2) nach Anspruch 1, wobei
eine Breite (WFC) des zentralen Bereichs (48A) nicht weniger als 20 % einer Breite (WT) einer Laufflächenoberfläche (22) beträgt, und
jedes Ende (48Ae) des zentralen Bereichs (48A) in der axialen Richtung innen von der Schulterumfangsrille (28s) angeordnet ist.

3. Schwerlastluftreifen (2) nach Anspruch 1 oder 2, wobei die Dichte des Bandkords (52) in jedem der Endbereiche (48B) nicht weniger als das 1,2-fache und nicht mehr als das 2,0-fache der Dichte des Bandkords (52) in dem mittleren Bereich (48A) beträgt.

4. Schwerlastluftreifen (2) nach einem der Ansprüche 1 bis 3, wobei ein Abstand (WA) von dem Äquator (PC) des Reifens (2) zu der Schulterumfangsrille (28s) nicht weniger als 45 % und nicht mehr als 70 % eines Abstands (HWT) von dem Äquator (PC) des Reifens (2) zu einem Ende (PE) der Laufflächenoberfläche (22) beträgt.

5. Schwerlastluftreifen (2) nach einem der Ansprüche 1 bis 4, wobei eine Breite (WC) des Landabschnitts (30c), der den Äquator (PC) des Reifens (2) umfasst, nicht weniger als 5 % und nicht mehr als 65 % der Breite (WT) der Laufflächenoberfläche (22) beträgt.

6. Schwerlastluftreifen (2) nach Anspruch 5, wobei die Breite (WC) des Landabschnitts (30c), der den Äquator (PC) des Reifens (2) umfasst, nicht weniger als 12 % der Breite (WT) der Laufflächenoberfläche (22) beträgt.

7. Schwerlastluftreifen (2) nach einem der Ansprüche 1 bis 6, wobei eine Dichte des Bandkords (52) jedes der Randbänder (50) höher als die oder gleich der Dichte des Bandkords (52) in jedem der Endbereiche (48B) des Vollbands (48) ist.

8. Schwerlastluftreifen (2) nach einem der Ansprüche 1 bis 7, wobei eine Breite (WE) jedes der Randbänder (50) nicht weniger als 15 % und nicht mehr als 40 % eines Abstands von dem Äquator (PC) des Reifens (2) zu dem Ende (48e) des Vollbands (48) beträgt.

9. Schwerlastluftreifen (2) nach einem der Ansprüche 1 bis 8, wobei
mindestens drei Umfangsrillen (28) auf der Lauffläche (4) gebildet sind, und
eine Breite von mindestens einer Umfangsrille (28m) unter den Umfangsrillen (28), die in der axialen Richtung innen von der Schulterumfangsrille (28s) gebildet sind, schmaler als eine Breite der Schulterumfangsrille (28s) ist.

10. Schwerlastluftreifen (2) nach einem der Ansprüche 1 bis 9, wobei
mindestens drei Umfangsrillen (28) auf der Lauffläche (4) gebildet sind, und
eine Tiefe (DGm) von mindestens einer Umfangsrille (28m) unter den Umfangsrillen (28), die in der axialen Richtung innen von der Schulterumfangsrille (28s) gebildet sind, flacher als eine Tiefe (DGs) der Schulterumfangsrille (28s) ist.

11. Schwerlastluftreifen (2) nach einem der Ansprüche 1 bis 10, wobei ein Abstand (SF) in der axialen Richtung von der Schulterumfangsrille (28s) zu dem Ende (48e) des Vollbands (48) nicht weniger als 10 % und nicht mehr als 50 % einer Breite (WS) des Schulterlandabschnitts (30s) beträgt.

12. Schwerlastluftreifen (2) nach einem der Ansprüche 1 bis 11, wobei ein Abstand (WD) in der axialen Richtung von jedem Ende (48e) des Vollbands (48) zu dem inneren Ende (50ue) von jedem der Randbänder (50) nicht weniger als 10 mm beträgt.

13. Schwerlastluftreifen (2) nach einem der Ansprüche 1 bis 12, wobei jedes Ende (48e) des Vollbands (48) in der axialen Richtung innen von einem Ende (38e) des Gürtels (38) angeordnet ist.

14. Schwerlastluftreifen (2) nach einem der Ansprüche 1 bis 13, wobei mindestens eine Gürtellage (42) unter der Vielzahl von Gürtellagen (42) in der radialen Richtung innen von dem Vollband (48) angeordnet ist.

## Revendications

1. Bandage pneumatique pour service intensif (2) ayant un rapport d'aspect nominal qui n'est pas supérieur à 65 %, le bandage pneumatique pour service intensif (2) comprenant :
une bande de roulement (4) configurée pour venir en contact avec une surface routière ; et
une couche de renforcement (20) située à l'intérieur de la bande de roulement (4) dans une direction radiale, dans lequel
au moins deux rainures circonférentielles (28) sont formées sur la bande de roulement (4) pour former au moins trois portions en relief (30) alignées dans une direction axiale,
parmi lesdites au moins deux rainures circonférentielles (28), la rainure circonférentielle (28) située sur chaque côté extérieur dans la direction axiale est une rainure circonférentielle d'épaulement (28s),
la portion en relief (30) située à l'extérieur de la rainure circonférentielle d'épaulement (28s) dans la direction axiale est une portion en relief d'épaulement (30s),
l'une desdites au moins trois portions en relief (30) est une portion en relief (30c) incluant un équateur (PC) du pneumatique (2),
la couche de renforcement (20) inclut une ceinture (38) incluant un grand nombre de câblés de ceinture (44) alignés les uns avec les autres, et une bande (40) incluant un câblé de bande enroulé de manière hélicoïdale (52),
la ceinture (38) inclut une pluralité de nappes de ceinture (42) alignées dans la direction radiale,
la bande (40) inclut une bande complète (48) ayant des extrémités (48e) opposées l'une à l'autre à travers un plan d'équateur (CL),
la bande complète (48) inclut deux régions d'extrémité (48B) situées chacune sur le côté extérieur dans la direction axiale, et une région centrale (48A) interposée entre les deux régions d'extrémité (48B),
une densité du câblé de bande (52) dans la région centrale (48A) est inférieure à une densité du câblé de bande (52) dans chacune des régions d'extrémité (48B),
chaque extrémité (48e) de la bande complète (48) est située à l'extérieur de la rainure circonférentielle d'épaulement (28s) dans la direction axiale,
**caractérisé en ce que**
la bande inclut en outre une paire de bandes de bords (50) situées à l'extérieur des extrémités (48e) de la bande complète (48) dans la direction radiale, dans lequel
une extrémité intérieure (50ue) de chacune des bandes de bords (50) est située à l'extérieur de la rainure circonférentielle d'épaulement (28s) dans la direction axiale.

2. Bandage pneumatique pour service intensif (2) selon la revendication 1, dans lequel
une largeur (WFC) de la région centrale (48A) n'est pas inférieure à 20 % d'une largeur (WT) d'une surface de bande de roulement (22), et
chaque extrémité (48Ae) de la région centrale (48A) est située à l'intérieur de la rainure circonférentielle d'épaulement (28s) dans la direction axiale.

3. Bandage pneumatique pour service intensif (2) selon la revendication 1 ou 2, dans lequel la densité du câblé de bande (52) dans chacune des régions d'extrémité (48B) n'est pas inférieure à 1,2 fois et n'est pas supérieure à 2,0 fois la densité du câblé de bande (52) dans la région centrale (48A).

4. Bandage pneumatique pour service intensif (2) selon l'une quelconque des revendications 1 à 3, dans lequel une distance (WA) depuis l'équateur (PC) du pneumatique (2) jusqu'à la rainure circonférentielle d'épaulement (28s) n'est pas inférieure à 45 % et n'est pas supérieure à 70 % d'une distance (HWT) depuis l'équateur (PC) du pneumatique (2) jusqu'à une extrémité (PE) de la surface de bande de roulement (22).

5. Bandage pneumatique pour service intensif (2) selon l'une quelconque des revendications 1 à 4, dans lequel une largeur (WC) de la portion en relief (30c) incluant l'équateur (PC) du pneumatique (2) n'est pas inférieure à 5 % et n'est pas supérieure à 65 % de la largeur (WT) de la surface de bande de roulement (22).

6. Bandage pneumatique pour service intensif (2) selon la revendication 5, dans lequel la largeur (WC) de la portion en relief (30c) incluant l'équateur (PC) du pneumatique (2) n'est pas inférieure à 12 % de la largeur (WT) de la surface de bande de roulement (22).

7. Bandage pneumatique pour service intensif (2) selon l'une quelconque des revendications 1 à 6, dans lequel une densité du câblé de bande (52) de chacune des bandes de bords (50) est supérieure ou égale à la densité du câblé de bande (52) dans chacune des régions d'extrémité (48B) de la bande complète (48).

8. Bandage pneumatique pour service intensif (2) selon l'une quelconque des revendications 1 à 7, dans lequel une largeur (WE) de chacune des bandes de bords (50) n'est pas inférieure à 15 % et n'est pas supérieure à 40 % d'une distance depuis l'équateur (PC) du pneumatique (2) jusqu'à l'extrémité (48e) de la bande complète (48e).

9. Bandage pneumatique pour service intensif (2) selon l'une quelconque des revendications 1 à 8, dans lequel
au moins trois rainures circonférentielles (28) sont formées sur la bande de roulement (4), et
une largeur d'au moins une rainure circonférentielle (28m) parmi les rainures circonférentielles (28) formées à l'intérieur de la rainure circonférentielle d'épaulement (28s) dans la direction axiale est plus étroite qu'une largeur de la rainure circonférentielle d'épaulement (28s).

10. Bandage pneumatique pour service intensif (2) selon l'une quelconque des revendications 1 à 9, dans lequel
au moins trois rainures circonférentielles (28) sont formées sur la bande de roulement (4), et
une profondeur (DGm) d'au moins une rainure circonférentielle (28m) parmi les rainures circonférentielles (28) formées à l'intérieur de la rainure circonférentielle d'épaulement (28s) dans la direction axiale est moins profonde qu'une profondeur (DGs) de la rainure circonférentielle d'épaulement (28s).

11. Bandage pneumatique pour service intensif (2) selon l'une quelconque des revendications 1 à 10, dans lequel une distance (SF) dans la direction axiale depuis la rainure circonférentielle d'épaulement (28) jusqu'à l'extrémité (48e) de la bande complète (48) n'est pas inférieure à 10 % et n'est pas supérieure à 50 % d'une largeur (WS) de la portion en relief d'épaulement (30s).

12. Bandage pneumatique pour service intensif (2) selon l'une quelconque des revendications 1 à 11, dans lequel une distance (WD) dans la direction axiale depuis chaque extrémité (48e) de la bande complète (48) jusqu'à l'extrémité intérieure (50ue) de chacune des bandes de bords (50) n'est pas inférieure à 10 mm.

13. Bandage pneumatique pour service intensif (2) selon l'une quelconque des revendications 1 à 12, dans lequel chaque extrémité (48e) de la bande complète (48) est située à l'intérieur d'une extrémité (38e) de la ceinture (38) dans la direction axiale.

14. Bandage pneumatique pour service intensif (2) selon l'une quelconque des revendications 1 à 13, dans lequel au moins une nappe de ceinture (42) parmi la pluralité de nappes de ceinture (42) est située à l'intérieur de la bande complète (48) dans la direction radiale.
